# EUROPÄISCHE PATENTSCHRIFT

(11) **EP 3 328 671 B1**
(45) Veröffentlichungstag und Bekanntmachung des Hinweises auf die Patenterteilung: **19.02.2020**
(21) Anmeldenummer: 16744722.6
(22) Anmeldetag: 26.07.2016
(51) Int. Cl.: B60K 11/08

(54) **LUFTKLAPPENANORDNUNG FÜR EIN FAHRZEUG**
VENTILATION FLAP ASSEMBLY FOR A VEHICLE
AGENCEMENT DE VOLETS D'AÉRATION POUR UN VÉHICULE

(30) Priorität: 31.07.2015 EP 15179308
(43) Veröffentlichungstag der Anmeldung: 06.06.2018
(73) Patentinhaber: WEIDPLAS GmbH, 8700 Küsnacht (CH)
(72) Erfinder: LAMBERT, Sven, 8630 Rüti (CH)
(74) Vertreter: Rutz, Andrea
(86) Internationale Anmeldenummer: PCT/EP2016/067749
(87) Internationale Veröffentlichungsnummer: WO 2017/021205

(56) Entgegenhaltungen:
- EP-A1- 1 974 974
- EP-A1- 2 716 483
- DE-A1- 3 836 374
- DE-T2- 69 200 726
- JP-A- 2008 106 982
- US-A- 1 737 946
- US-A1- 2012 247 018

## Beschreibung

### TECHNISCHES GEBIET

Die vorliegende Erfindung betrifft eine Luftklappenanordnung für ein Fahrzeug, insbesondere ein Kraftfahrzeug. Die Luftklappenanordnung dient zum Regeln der Luftmenge von einströmender bzw. ausströmender Luft durch eine Luftöffnung des Fahrzeugs.

### STAND DER TECHNIK

Fahrzeuge und insbesondere Kraftfahrzeuge, wie beispielsweise Automobile, weisen üblicherweise eine Vielzahl von Luftzuführ- und Luftauslassöffnungen auf, um Abluft von einem Innenraum des Fahrzeugs nach aussen zu führen oder um Frischluft von ausserhalb des Fahrzeugs ins Innere einzulassen. Eine Luftzuführöffnung kann beispielsweise zur Kühlung des Motors oder der Bremsen dienen oder für die Zuführung von Frischluft in den Fahrgastraum vorgesehen sein. Luftauslassöffnungen können zum Beispiel zum Abführen von Abluft aus dem Fahrgastraum oder dem Motorraum dienen.

Um die Menge an einströmender bzw. ausströmender Luft regeln zu können, ist es oft wünschenswert, wenn die Lufteinlass- und Luftauslassöffnung geöffnet und verschlossen werden kann. Aus diesem Grund sind in den Bereichen von Lufteinlass - und Luftauslassöffnungen häufig Luftklappenanordnungen vorgesehen, welche mittels Drehen von lamellenartigen Luftklappen ein kontinuierliches Verschliessen bzw. Freigeben der entsprechenden Luftöffnung erlauben.

Um jederzeit eine optimale Luftzuführung bzw. -abführung gewährleisten zu können, sind die Luftklappenanordnungen vorteilhaft automatisch von einer Kontrolleinheit steuerbar. Die Luftzuführung bzw. -abführung kann dadurch optimal an die jeweils aktuellen Erfordernisse bezüglich Motor- oder Bremskühlung, Raumklima etc. angepasst werden.

In der EP 0 327 740 A1 und der DE 198 60 336 A1 sind Luftklappenanordnungen offenbart, bei welchen jeweils mehrere Luftklappen gleichzeitig mittels eines verschiebbaren Betätigungselements verstellt werden können. Im Betätigungselement sind U-förmige Vertiefungen vorhanden, in welche an den Luftklappen angebrachte Nasen eingreifen, so dass bei einer Verschiebung des Betätigungselements diese Nasen und mit ihnen die Luftklappen gedreht werden.

Bei der in der DE 101 30 951 A1 gezeigten Luftklappenanordnung sind die einzelnen Luftklappen mittels einer Steuerstange derart seitlich miteinander verbunden, dass durch Bewegen der Steuerstange alle Luftklappen gleichzeitig verstellbar sind. Die Luftklappen können dabei auch in Stellungen gebracht werden, in denen sie nicht parallel zueinander ausgerichtet sind. Allerdings weist diese Luftklappenanordnung eine relativ komplizierte Konstruktion mit vielen beweglichen Teilen auf.

Für das Öffnen und Verschliessen der Lufteinlass- und Luftauslassöffnungen sind Antriebsvorrichtungen notwendig, welche zum Verstellen der Luftklappen eine gewisse Antriebskraft aufzubringen haben und entsprechend ausgelegt sein müssen. Dabei muss gewährleistet sein, dass die Luftklappen auch bei Extremsituationen zuverlässig geöffnet und verschlossen werden können. Eine Extremsituation tritt beispielsweise dann auf, wenn die Lufteinlass- oder Luftauslassöffnungen mit Dreck verschlammt, mit Insekten verklebt oder im Winter vereist sind. Ausserdem sind insbesondere die Lufteinlassöffnungen oft derart am Fahrzeug angeordnet, dass sie dem Fahrtwind stark ausgesetzt sind und entsprechend die Luftklappen gegen einen gewissen Luftdruck verstellt werden müssen. Zum Verstellen der Luftklappen müssen deshalb verhältnismässig leistungsstarke Antriebsvorrichtungen eingesetzt werden, welche dementsprechend kostspielig sind, einen hohen Energieverbrauch aufweisen und viel Platz beanspruchen.

Die DE 10 2011 055 394 A1 offenbart eine Luftklappenanordnung, bei welcher mittels eines einzigen Betätigungselements Luftklappen von unterschiedlichen Lufteinlassöffnungen in nicht synchroner Weise verstellt werden können. Auf diese Weise können mittels einer einzigen Antriebsvorrichtung unterschiedliche Lufteinlassöffnungen geöffnet bzw. verschlossen werden. Eine derartige Luftklappensteuerung für mehrere Lufteinlassöffnungen mit nur einer einzigen Antriebsvorrichtung eignet sich jedoch nur für spezielle Situationen und wenn die verschiedenen Lufteinlassöffnungen nahe beieinander angeordnet sind. Ausserdem weist diese Luftklappenanordnung eine verhältnismässig komplexe Bauweise mit vielen beweglich miteinander verbundenen Bauteilen auf. Dementsprechend kompliziert gestaltet sich die Montage dieser Luftklappenanordnung.

Die DE 692 00 726 T2 offenbart eine Luftklappenanordnung mit Klappen, an denen jeweils ein Kurbelarm mit einem Zapfen angebracht ist. Die Zapfen ragen in jeweils einen L-förmigen Schlitz hinein, der in einem beweglichen Organ ausgebildet ist. Durch Verschieben des beweglichen Organs sind die Klappen verstellbar, wobei der Verlauf der Klappenverstellung von den unterschiedlichen Längen der L-förmigen Schlitze abhängig ist.

### DARSTELLUNG DER ERFINDUNG

Es ist also eine Aufgabe der vorliegenden Erfindung, eine konstruktiv einfache Luftklappenanordnung für ein Fahrzeug anzugeben, bei welcher die Luftklappen mit einem geringen Kraftaufwand verstellt werden können.

Zur Lösung dieser Aufgabe wird eine Luftklappenanordnung vorgeschlagen, wie sie in Anspruch 1 angegeben ist. Ausserdem wird in Anspruch 14 ein Fahrzeug mit einer derartigen Luftklappenanordnung angegeben. Vorteilhafte Ausgestaltungen der Erfindung sind in den abhängigen Ansprüchen angegeben.

Die vorliegende Erfindung stellt also eine Luftklappenanordnung für ein Fahrzeug, insbesondere ein Kraftfahrzeug, wie zum Beispiel ein Automobil, zur Verfügung, aufweisend zumindest eine erste Luftklappe und eine zweite Luftklappe, welche jeweils von einer ersten Stellung in eine zweite Stellung verstellbar sind, um eine in der zweiten Stellung im Vergleich zur ersten Stellung veränderte, vorzugsweise kleinere, Luftmenge durch eine Luftöffnung des Fahrzeugs hindurchströmen zu lassen; sowie
ein Betätigungselement zum Verstellen sowohl der ersten als auch der zweiten Luftklappe.

Das Betätigungselement ist dazu ausgebildet, bei einer Betätigung zuerst die erste Luftklappe von ihrer ersten in ihre zweite Stellung zu verstellen und erst dann die zweite Luftklappe von ihrer ersten in ihre zweite Stellung zu verstellen.

Die erste und die zweite Luftklappe werden mit anderen Worten bei einer Betätigung des Betätigungselements also asynchron verstellt. Bei der Betätigung des Betätigungselements beginnt die Verstellbewegung der zweiten Luftklappe insbesondere erst dann, wenn die Verstellbewegung der ersten Luftklappe bereits begonnen hat. Vorzugsweise beginnt die Verstellbewegung der zweiten Luftklappe sogar erst dann, wenn die Verstellbewegung der ersten Luftklappe bereits abgeschlossen ist und die erste Luftklappe bereits ihre zweite Stellung erreicht hat.

Vorteilhaft ist es möglich, das Betätigungselement nur teilweise zu betätigen, um dadurch nur die erste Luftklappe zu verstellen und diese dabei in ihre zweite Stellung zu bringen, nicht aber die zweite Luftklappe, welche bei dieser nur teilweisen Betätigung des Betätigungselements bevorzugt in ihrer ersten Stellung verbleibt. Das Betätigungselement weist vorteilhaft also eine Zwischenstellung auf, in welcher die erste Luftklappe bereits in der zweiten Stellung ist, die zweite Luftklappe jedoch noch in der ersten Stellung.

Indem zuerst die erste Luftklappe und erst dann die zweite Luftklappe verstellt wird, kann das Verstellen insbesondere bei stark dem Fahrtwind ausgesetzten, vereisten oder verdreckten Luftklappen mit einem insgesamt geringeren Kraftaufwand erfolgen. Durch das asynchrone Verstellen wird der an den Luftklappen haftende Dreck einfacher gelöst und allfällige Eisbrücken, welche sich zwischen den einzelnen Luftklappen ausgebildet haben, können mit einem geringeren Kraftaufwand aufgebrochen werden. Da nach dem Verstellen der ersten Luftklappe bereits Luft die Luftöffnung durchströmen kann, ist der auf die zweite Luftklappe danach wirkende Luftdruck wesentlich geringer, so dass diese mit einem geringeren Kraftaufwand verstellt werden kann. Der benötigte Kraftaufwand, d.h. insbesondere das erforderliche Drehmoment, ist zudem in Bezug auf den Maximalbetrag deutlich kleiner, wenn die einzelnen Luftklappen nacheinander verstellt werden, als wenn alle Luftklappen gemeinsam bewegt werden müssen. Es kann dadurch eine Antriebseinheit verwendet werden, die kleiner dimensioniert ist, weniger Platz beansprucht und kostengünstiger ist.

Die asynchrone Verstellung der Luftklappen erlaubt ausserdem eine einfache und genaue Einstellung der durchströmenden Luftmenge, indem zum Beispiel nur ein Teil der Luftklappen in die Öffnungsstellung gebracht werden, während die anderen Luftklappen in der Schliessstellung sind.

Vorteilhaft erfolgt nicht nur das Verstellen der Luftklappen von der ersten in die zweite Stellung asynchron, sondern auch das Verstellen der Luftklappen von der zweiten in die erste Stellung. Die asynchrone Verstellbewegung der Luftklappen betrifft also vorteilhaft sowohl das Öffnen als auch das Verschliessen der Luftöffnung mittels der Luftklappen. Dem Beobachter bietet sich dadurch ein einheitliches, ästhetisches Bild in Bezug auf die Verstellbewegungen. Ausserdem treten Veränderungen in Bezug auf die Aerodynamik des Fahrzeugs weniger abrupt auf.

Die erste und die zweite Luftklappe sind bevorzugt jeweils lamellenförmig ausgestaltet. Es können auch mehr als zwei bevorzugt lamellenförmige Luftklappen vorgesehen sein, welche insbesondere bei einer Betätigung des Betätigungselements nacheinander, das heisst eine Luftklappe nach der anderen, verstellt werden. Bevorzugt werden die Luftklappen dabei in der Reihenfolge ihrer räumlichen Anordnung nacheinander verstellt, das heisst zueinander benachbarte Luftklappen werden nacheinander verstellt, ohne dass beim Verstellvorgang eine Luftklappe übersprungen wird.

Die Luftklappenanordnung ist bevorzugt derart ausgebildet, dass das Betätigungselement im Laufe der Betätigung direkt oder indirekt mit der ersten und/oder der zweiten Luftklappe in Kontakt gerät, insbesondere an der ersten und/oder der zweiten Luftklappe anschlägt, um dadurch die erste und/oder zweite Luftklappe von ihrer ersten in ihre zweite Stellung zu verstellen. Beispielsweise kann somit die Luftklappenanordnung derart ausgebildet sein, dass das Betätigungselement in einer Anfangs- oder Grundstellung direkt oder indirekt bereits schon mit der ersten Luftklappe in Kontakt steht, wobei die zweite Luftklappe direkt oder indirekt noch nicht in Kontakt mit dem Betätigungselement ist. Bei dieser Variante wird somit bei der Betätigung des Betätigungselementes die erste Luftklappe unmittelbar von ihrer ersten in ihre zweite Stellung verstellt und die zweite Luftklappe, zeitlich zur Bewegung der ersten Luftklappe versetzt, von ihrer ersten in ihre zweite Stellung verstellt. Diese vorteilhafte Ausführungsform der Luftklappenanordnung bietet den Vorteil, dass die Luftöffnung vergleichsweise schnell und mit geringem Kraftaufwand geöffnet bzw. geschlossen werden kann.

Die Betätigung des Betätigungselements erfolgt zum Beispiel, indem es translatorisch verschoben und/oder gedreht wird. Das Betätigungselement kann dabei nacheinander direkt oder indirekt, das heisst via weitere Bauelemente, in Kontakt mit der ersten und der zweiten Luftklappe kommen und diese dabei verstellen. Es ist aber auch möglich, dass das Betätigungselement fest mit der ersten Luftklappe verbunden ist und erst im Laufe der Betätigung mit der zweiten Luftklappe in Kontakt kommt, um diese zu verstellen.

An der ersten Luftklappe ist ein erster Verstellhebel und an der zweiten Luftklappe ein zweiter Verstellhebel angebracht. Das Betätigungselement weist zudem einen oder mehrere Mitnehmer auf, welche bei einer Betätigung des Betätigungselements zuerst am ersten Verstellhebel anschlagen, um dadurch die erste Luftklappe von ihrer ersten in ihre zweite Stellung zu verstellen, und danach am zweiten Verstellhebel anschlagen, um dadurch die zweite Luftklappe von ihrer ersten in ihre zweite Stellung zu verstellen. Auf diese Weise kann sehr einfach eine asynchrone Verstellung der Luftklappen erreicht werden. Mittels entsprechender Anordnung und Ausbildung des bzw. der Mitnehmer auf dem Betätigungselement und/oder mittels entsprechender Ausbildung des bzw. der Verstellhebel kann das Verstellverhalten der Luftklappen auch sehr einfach eingestellt und angepasst werden.

Eine besonders einfache Konstruktion wird erreicht, indem die Mitnehmer durch jeweils einen am Betätigungselement vorgesehenen Vorsprung gebildet werden. Die Vorsprünge, welche die Mitnehmer bilden, erstrecken sich dabei vorteilhaft jeweils senkrecht von einer äusseren Oberfläche des Betätigungselements weg. Bevorzugt sind die Mitnehmer einstückig mit dem Betätigungselement verbunden. Bei einer derartigen Ausführungsform mit einem Betätigungselement, welches durch Vorsprünge gebildete Mitnehmer aufweist, können die Verstellhebel besonders einfach ausgebildet sein. So können die Verstellhebel insbesondere jeweils durch ein geometrisch einfach ausgebildetes Element, wie zum Beispiel ein stiftförmiges oder ein quaderförmiges Element, gebildet werden, das in radialer Richtung von der Drehachse der entsprechenden Luftklappe nach aussen ragt.

Vorteilhaft sind der oder die Mitnehmer dazu ausgebildet, die Luftklappen nach dem Verstellen in ihrer jeweils zweiten Stellung zu halten. Bevorzugt weisen der oder die Mitnehmer hierfür jeweils eine erste Anschlagfläche auf, um zumindest eine der Luftklappen von ihrer ersten in ihre zweite Stellung zu verstellen, sowie eine zweite Anschlagfläche, um jeweils dieselbe Luftklappe nach dem Verstellen in ihrer zweiten Stellung zu halten. Die erste Anschlagfläche und die zweite Anschlagfläche sind dabei mit ihren Oberflächennormalen vorteilhaft im Wesentlichen senkrecht zueinander angeordnet. Die in diesem Abschnitt genannten Ausführungsformen der Luftklappenanordnung bewirken den Vorteil, dass die Verriegelung der Luftklappen in ihren zweiten Stellungen, insbesondere Schliessstellungen, besonders gut ist.

Das Betätigungselement kann einen ersten Mitnehmer und einen zweiten Mitnehmer aufweisen, wobei der erste Mitnehmer zum Anschlagen an den ersten Verstellhebel dient, um dadurch die erste Luftklappe zu verstellen, und der zweite Mitnehmer zum Anschlagen an den zweiten Verstellhebel dient, um dadurch die zweite Luftklappe zu verstellen.

Wenn das Betätigungselement mehrere Mitnehmer aufweist, können diese insbesondere im Wesentlichen auf einer geraden Linie angeordnet sein. Sie können aber auch im Wesentlichen auf einer Kreislinie angeordnet sein. Je nach Anordnung der Mitnehmer wird das Betätigungselement zur Betätigung dann bevorzugt translatorisch verschoben oder gedreht, um eine optimale Kraftübertragung vom Betätigungselement auf die Luftklappen zu gewährleisten. Zum Verstellen der Luftklappen kann das Betätigungselement insbesondere relativ zu diesen im Wesentlichen geradlinig entlang einer Verschieberichtung verschiebbar sein. Vorteilhaft sind die Luftklappen im Wesentlich parallel zueinander angeordnet und die Verschieberichtung verläuft im Wesentlichen senkrecht zur Längserstreckung der Luftklappen und insbesondere in der durch die parallele Luftklappenanordnung gebildete Ebene.

Bei einer Anordnung der Mitnehmer auf einer Kreislinie ist das Betätigungselement vorteilhaft als Drehrad ausgebildet. Dies bewirkt eine optimale Kraftübertragung vom Drehrad auf die Mitnehmer, wenn diese auf einer Kreislinie angeordnet sind. Die Luftklappen können gemäss einer Weiterbildung der Erfindung sternförmig angeordnet und dann insbesondere mittels eines Betätigungselements in Form eines Drehrades verstellbar sein.

Vorteilhaft sind die Luftklappen jeweils mit einer in Richtung der ersten Stellung wirkenden Kraft, insbesondere Federkraft, beaufschlagt. Dies ermöglicht eine besonders einfache Konstruktion der Luftklappenanordnung.

Die erste und die zweite Stellung der Luftklappen unterscheiden sich vorteilhaft jeweils dadurch voneinander, dass die Luftklappen in der zweiten Stellung im Vergleich zur ersten Stellung um ca. 90° gedreht sind. Dies bietet den Vorteil, dass eine maximal grosse Luftmenge durch die Luftöffnung durchgelassen werden kann. Die Drehung erfolgt bevorzugt um die Längsachsen der Luftklappen, das heisst üblicherweise um jeweils eine Achse, welche entlang der maximalen Ausdehnungsrichtung der Luftklappe verläuft.

Bevorzugt stellen die ersten Stellungen der Luftklappen jeweils Öffnungsstellungen dar und die zweiten Stellungen der Luftklappen jeweils Schliessstellungen. In den Öffnungsstellungen wird vorteilhaft eine maximal grosse Luftmenge durch die Luftöffnung durchgelassen und in den Schliessstellungen eine maximal kleine. Wenn die erste Stellung eine Öffnungsstellung darstellt, ist gewährleistet, dass in der Grundstellung, um welche es sich bei der ersten Stellung in der Regel handelt, Luft durch die Luftöffnung hindurchströmen kann. Dies bietet den Vorteil, dass dem Fahrzeugin der Grundstellung der Luftklappen bzw. im Normalfall stets Kühlluft zugeführt werden kann. Die ersten Stellungen der Luftklappen können aber jeweils auch Schliessstellungen und die zweiten Stellungen Öffnungsstellungen darstellen. Vorzugsweise ist mittels Verstellen der ersten und der zweiten Luftklappe jeweils die durch eine einzige Luftöffnung hindurchströmende Luftmenge veränderbar

Vorteilhaft sind die erste, die zweite und allfällige weitere Luftklappen gemeinsam in einem Rahmen gehalten, welcher eine Luftdurchtrittsöffnung aufweist, die mittels dieser Luftklappen vollständig oder zumindest weitgehend verschlossen bzw. freigegeben werden kann. Im Falle einer nur weitgehend verschlossenen Luftdurchtrittsöffnung ist gewährleistet, dass, wenn ein Grossteil oder sämtliche Luftklappen in der Schliessstellung sind und diese beispielsweise aufgrund eines Defektes nicht mehr in die Öffnungsstellung bewegbar sind, dem Fahrzeug immer noch eine gewisse Restmenge an Kühlluft zugeführt werden kann. Bei einer parallelen Anordnung der Luftklappen sind der Rahmen und insbesondere dessen Luftdurchtrittsöffnung in der Regel rechteckig ausgebildet, bei einer sternförmigen Luftklappenanordnung in der Regel rund, insbesondere kreisrund.

In einer bevorzugten Ausführungsform weist das Betätigungselement ein Langloch auf, welches von einem an der ersten Luftklappe angebrachten ersten Element sowie von einem an der zweiten Luftklappe angebrachten zweiten Element durchragt wird. Während die Luftklappen dann auf der einen Seite des Betätigungselements angeordnet sein können, können die an diesen angebrachten Verstellhebel auf der anderen, von den Luftklappen abgewandten Seite des Betätigungselements angeordnet sein. Das Betätigungselement kann sich dann also insbesondere zwischen den Luftklappen und den Verstellhebeln befinden. Bei dieser Ausführungsform der Luftklappenanordnung können die Verstellhebel leicht ausgetauscht werden.

Die Erfindung bezieht sich ausserdem auf ein Fahrzeug, insbesondere ein Kraftfahrzeug, mit einer oder mehreren Luftklappenanordnungen, wie sie oben angegeben sind.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1a: eine perspektivische Ansicht einer Luftklappenanordnung gemäss einer ersten erfindungsgemässen Ausführungsform, wobei das Betätigungselement eine Grundstellung einnimmt;
- Fig. 1b: eine perspektivische Ansicht der Luftklappenanordnung der Fig. 1a, wobei das Betätigungselement eine erste Zwischenstellung einnimmt;
- Fig. 1c: eine perspektivische Ansicht der Luftklappenanordnung der Fig. 1a, wobei das Betätigungselement eine zweite Zwischenstellung einnimmt;
- Fig. 1d: eine perspektivische Ansicht der Luftklappenanordnung der Fig. 1a, wobei das Betätigungselement eine Endstellung einnimmt;
- Fig. 2a: eine Seitenansicht auf die in der Fig. 1a gezeigte Luftklappenanordnung;
- Fig. 2b: eine Seitenansicht auf die in der Fig. 1b gezeigte Luftklappenanordnung;
- Fig. 2c: eine Seitenansicht auf die in der Fig. 1c gezeigte Luftklappenanordnung;
- Fig. 2d: eine Seitenansicht auf die in der Fig. 1d gezeigte Luftklappenanordnung;
- Fig. 3: eine Explosionsansicht der in der Fig. 1a gezeigten Luftklappenanordnung;
- Fig. 4: eine Seitenansicht auf die in der Fig. 1a gezeigte Luftklappenanordnung, ohne Betätigungselement und Verstellhebel;
- Fig. 5: eine Seitenansicht auf den an einer Luftklappe angebrachten Verstellhebel mit einer Rückstellfederanordnung gemäss einer ersten Variante;
- Fig. 6: eine Seitenansicht auf den an einer Luftklappe angebrachten Verstellhebel mit einer Rückstellfederanordnung gemäss einer zweiten Variante;
- Fig. 7: eine Seitenansicht auf den an einer Luftklappe angebrachten Verstellhebel mit einer Rückstellfederanordnung gemäss einer dritten Variante;
- Fig. 8: eine Seitenansicht auf eine Luftklappenanordnung gemäss einer zweiten erfindungsgemässen Ausführungsform, mit integrierter Antriebseinheit;
- Fig. 9: eine Seitenansicht auf eine Luftklappenanordnung gemäss einer dritten erfindungsgemässen Ausführungsform, mit integrierter Antriebseinheit;
- Fig. 10: eine erste perspektivische Ansicht einer Luftklappenanordnung gemäss einer vierten erfindungsgemässen Ausführungsform, mit einem Betätigungselement in Form eines Drehrades, wobei nur eine Luftklappe gezeigt ist;
- Fig. 11: eine zweite perspektivische Ansicht der in der Fig. 10 gezeigten Luftklappenanordnung, wobei mehrere Luftklappen gezeigt sind;
- Fig. 12: eine perspektivische Ansicht eines Fahrzeugs mit einer in der Frontpartie angeordneten, erfindungsgemässen Luftklappenanordnung mit horizontalen Luftklappen;
- Fig. 13: eine perspektivische Ansicht eines Fahrzeugs mit einer in der Motorhaube angeordneten, erfindungsgemässen Luftklappenanordnung;
- Fig. 14: eine perspektivische Ansicht eines Fahrzeugs mit einer in der Frontpartie angeordneten, erfindungsgemässen Luftklappenanordnung mit vertikalen Luftklappen;
- Fig. 15: eine perspektivische Ansicht eines Fahrzeugs mit zwei in der Frontpartie angeordneten, erfindungsgemässen Luftklappenanordnungen;
- Fig. 16: eine perspektivische Ansicht eines Fahrzeugs mit einer in einem hinteren Fahrzeugbereich angeordneten erfindungsgemässen Luftklappenanordnung;
- Fig. 17: eine perspektivische Ansicht eines Fahrzeugs mit einer seitlich angeordneten erfindungsgemässen Luftklappenanordnung;
- Fig. 18: perspektivische Ansichten von Fahrzeugen mit jeweils sternförmigen, im Bereich eines Wärmetauschers angeordneten, erfindungsgemässen Luftklappenanordnungen; sowie
- Fig. 19: eine perspektivische Ansicht eines Fahrzeugs mit zwei sternförmigen, in der Frontpartie angeordneten, erfindungsgemässen Luftklappenanordnungen.

### BESCHREIBUNG BEVORZUGTER AUSFÜHRUNGSFORMEN

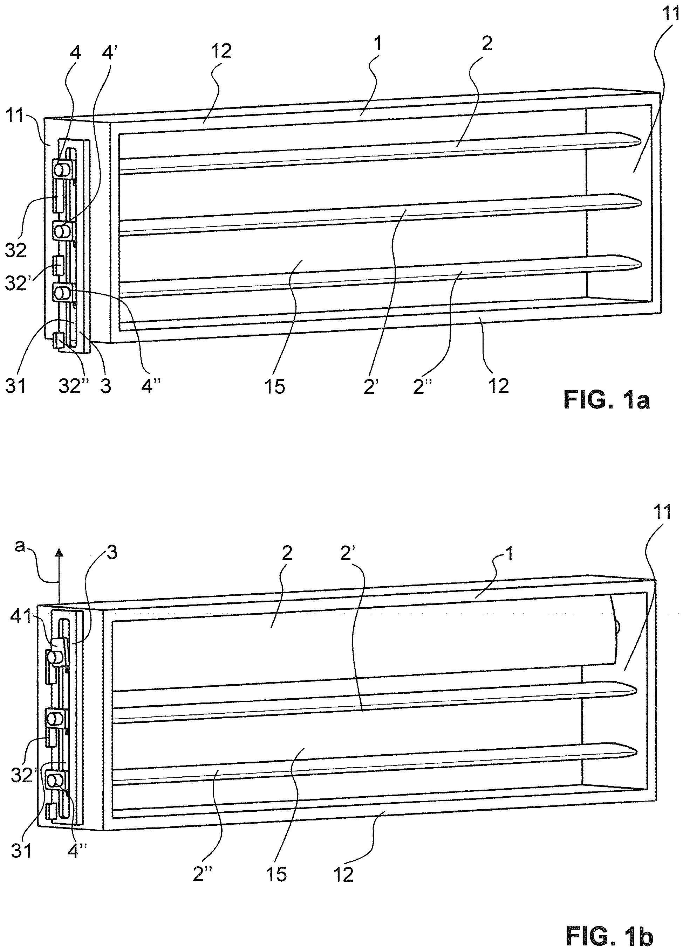

Bei den verschiedenen, in den Figuren 1a bis 19 gezeigten Ausführungsformen und Varianten sind Elemente, welche identische oder ähnliche Funktionen aufweisen, jeweils mit denselben Bezugszeichen versehen.

In den Figuren 1a bis 4 ist eine erste Ausführungsform einer erfindungsgemässen Luftklappenanordnung dargestellt. Bei dieser Ausführungsform sind drei lamellenartige Luftklappen 2, 2', 2" gemeinsam in einem rechteckigen Rahmen 1 gehalten. Der Rahmen 1 weist eine ebenfalls rechteckige Luftdurchtrittsöffnung 15 auf, welche je nach Drehstellung der Luftklappen 2, 2', 2" von diesen verschlossen oder freigegeben wird. Selbstverständlich könnten zur Erfüllung dieser Funktion auch nur zwei oder aber mehr als drei Luftklappen 2 vorgesehen sein.

Der Rahmen 1 wird durch zwei parallel zueinander angeordnete Längswände 12 sowie durch zwei parallel zueinander angeordnete Seitenwände 11 gebildet. Die beiden Längswände 12 erstrecken sich entlang einer Längsrichtung des Rahmens 1 und sind jeweils an ihren Enden via die daran angebrachten Seitenwände 11 miteinander verbunden.

Die Luftklappen 2, 2', 2" sind wie erwähnt lamellenartig ausgebildet und weisen senkrecht zur ihrer Längserstreckung jeweils ein aerodynamisches Profil auf. Aufgrund dieses aerodynamischen Profils ist der Luftwiderstand auf die Luft, welche die Luftdurchtrittsöffnung 15 durchströmt, bei geöffneter Klappenstellung minimal. Die Luftklappen 2, 2', 2" sind jeweils beidseitig in den Seitenwänden 11 des Rahmens 1 gehalten und dabei relativ zum Rahmen 1 um eine Drehachse frei drehbar, welche sich in Längsrichtung des Rahmens 1 sowie entlang der Längsrichtung der Luftklappen 2, 2', 2" erstreckt.

In eine senkrecht zu ihrer Längsrichtung stehende Richtung weisen die drei Luftklappen 2, 2', 2" jeweils eine Breite auf, die geringfügig grösser als ein Drittel der bei geschlossener Klappenstellung in dieselbe Richtung gemessene Breite der Luftdurchtrittsöffnung 15. Entlang der Längsrichtung sind die Luftklappen 2, 2', 2" jeweils geringfügig kürzer ausgebildet als die Luftdurchtrittsöffnung 15 entlang der Längsrichtung des Rahmens 1. Auf diese Weise ist die Luftdurchtrittsöffnung 15 bei einer entsprechenden Stellung der Luftklappen 2, 2', 2" von diesen verschliessbar. Die Luftklappen 2, 2', 2" weisen somit jeweils eine Schliessstellung, welche zum Beispiel in der Figur 1b von der dort zuoberst abgebildeten Luftklappe 2 eingenommen wird, sowie eine Öffnungsstellung auf, welche in der Figur 1b von den unteren beiden Luftklappen 2', 2" eingenommen wird.

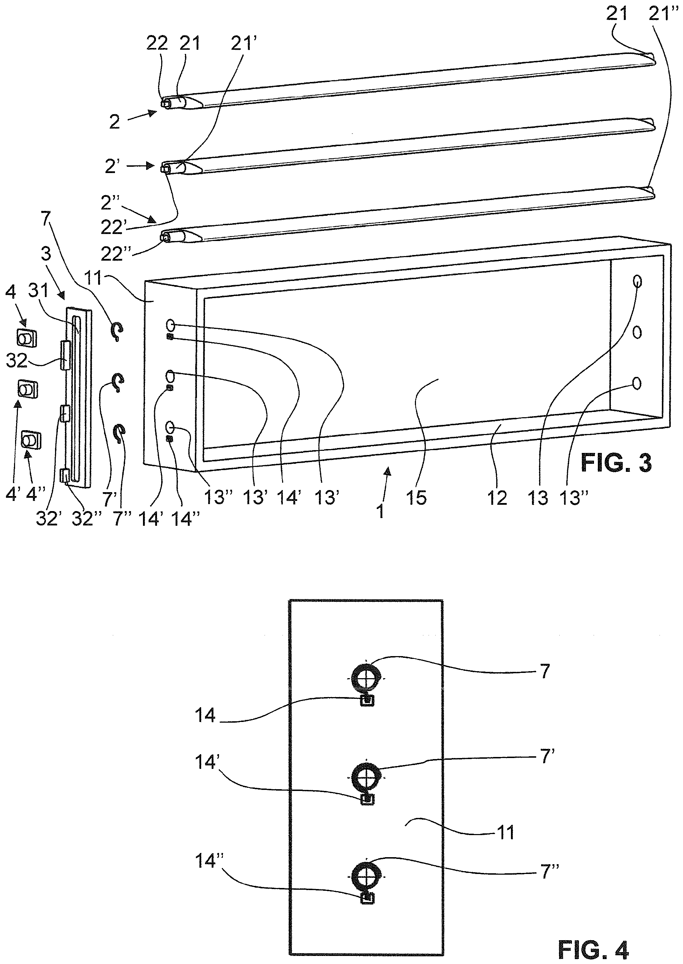

Wie in der Figur 3 erkennbar ist, sind an den Enden der Luftklappen 2, 2', 2" beidseitig jeweils Befestigungsstifte 21, 21', 21" angebracht. Die Befestigungsstifte 21, 21', 21" sind in Bezug auf das Profil bzw. die Querschnittsfläche der Luftklappen 2, 2', 2" jeweils im Wesentlichen mittig angeordnet und definieren deren Drehachse. Zur Montage der Luftklappen 2, 2', 2" im Rahmen 1 werden diese Befestigungsstifte 21, 21', 21" jeweils in entsprechend ausgebildete Montagelöcher 13, 13', 13" eingeführt, welche in den Seitenwänden 11 des Rahmens vorgesehen sind. Im fertig montierten Zustand der Luftklappen 2, 2', 2" durchragen die Befestigungsstifte 21, 21', 21" die Montagelöcher 13, 13', 13" jeweils zumindest zum Teil, bevorzugt vollständig. Die Halterung der Befestigungsstifte 21, 21', 21" in den Montagelöchern 13, 13', 13" ermöglicht es, die Luftklappen 2, 2', 2" frei und unabhängig voneinander im Rahmen 1 zu drehen.

Auf einer Seite der Luftklappen 2, 2', 2" ist am stirnseitigen Ende der Befestigungsstifte 21, 21', 21" jeweils ein Vierkant-Kupplungselement 22, 22', 22" angebracht (siehe Figur 3). Dieses dient zum Anbringen von jeweils einem Verstellhebel 4, 4', 4" an der Luftklappe 2, 2', 2". Die Verstellhebel 4, 4', 4" weisen hierfür jeweils eine in den Figuren nicht sichtbare, entsprechend ausgestaltete Vertiefung auf, welche zur Aufnahme eines Vierkant-Kupplungselements 22, 22', 22" dient. Die Verstellhebel 4, 4', 4" können insbesondere auf die Vierkant-Kupplungselemente 22, 22', 22" aufgepresst sein, um form-und kraftschlüssig an den Luftklappen 2, 2', 2" fixiert zu sein. Die Verstellhebel 4, 4', 4" sind jeweils drehfest an den Luftklappen 2, 2', 2" angebracht, so dass die Luftklappen 2, 2', 2" mittels Drehen der Verstellhebel 4, 4', 4" um ihre Drehachse gedreht werden können.

Die Verstellhebel 4, 4', 4" weisen eine jeweils rechteckige Form mit zwei Längs- und zwei Breitseiten sowie mit einer Oberseite und einer den Luftklappen 2, 2', 2" zugewandten Unterseite auf. Die Unterseiten sind mit Ausnahme einer Vertiefung, welche zur Aufnahme von einem der Vierkant-Kupplungselemente 22, 22', 22" dient, jeweils flach ausgebildet. Die Vertiefung ist mittig zwischen den beiden Längsseiten des Verstellhebels 4, 4', 4" in der Nähe von einer der Breitseiten des Verstellhebels 4, 4', 4" angeordnet. Aufgrund dieser insgesamt dezentralen Anordnung der Vertiefung weisen die an den Luftklappen 2, 2', 2" angebrachten Verstellhebel 4, 4', 4" jeweils einen vorstehenden Betätigungsbereich 41, 41', 41" auf, mittels welchem die jeweilige Luftklappe 2, 2', 2" um ihre durch die Vertiefung verlaufende Drehachse gedreht und somit verstellt werden kann. In der ansonsten flach ausgebildeten Oberseite bildet die gegenüberliegende Vertiefung eine entsprechende Erhöhung.

Die Luftklappen 2, 2', 2" sind jeweils in Richtung ihrer Öffnungsstellung mit einer Federkraft beaufschlagt. Hierzu sind jeweils Rückstellfedern 7, 7', 7" vorgesehen, welche zum Beispiel als Torsionsfedern ausgebildet sein können und mit einem ersten Ende jeweils am Befestigungsstift 21, 21', 21" und mit einem zweiten Ende an einer Federhalterung 14, 14', 14" befestigt sind (Figur 4). Die Federhalterungen 14, 14', 14" sind auf der Aussenseite des Rahmens 1 in den Bereichen der Montagelöcher 13, 13', 13" angeordnet.

Um die Luftklappen 2, 2', 2" zu verstellen, ist ein Betätigungselement 3 vorgesehen, welches hier eine insgesamt langgestreckte, im Wesentlichen rechteckige Form aufweist. Das Betätigungselement 3 weist ein Langloch 31 auf, welches sich über einen Grossteil der Längserstreckung des Betätigungselements 3 erstreckt. Die Längserstreckung des Langlochs 31 definiert eine Verschieberichtung a des Betätigungselements 3. Entlang der Längserstreckung des Langlochs 31 sind mehrere, hier drei Mitnehmer 32, 32', 32" vorgesehen, welche durch jeweils einen Vorsprung gebildet werden, der senkrecht zu der durch das Langloch 31 gebildeten Fläche hervorragt. Die Mitnehmer 32, 32', 32" sind auf einer geraden Linie und, im vorliegenden Ausführungsbeispiel, in unregelmässigen Abständen angeordnet. In Richtung der Verschieberichtung a des Betätigungselements 3 weisen die Mitnehmer 32, 32', 32" zudem unterschiedliche Längserstreckungen auf. Die Mitnehmer 32, 32', 32" bilden jeweils eine erste Anschlagfläche 33, 33', 33", welche in Richtung der Längserstreckung des Betätigungselements 3 und somit in die Verschieberichtung a gewandt ist, sowie eine senkrecht dazu stehende zweite Anschlagfläche 34, 34', 34", welche zum Langloch 31 hin gewandt ist.

Bei der Montage der Luftklappenanordnung werden die Luftklappen 2, 2', 2" mit ihren jeweils zwei Befestigungsstiften 21, 21', 21" in die Montagelöcher 13, 13', 13" des Rahmens 1 eingesetzt. Die Rückstellfedern 7, 7', 7" werden dann derart angebracht, dass sie jeweils mit einem der Befestigungsstifte 21, 21', 21" einerseits und mit einer der Federhalterungen 14, 14', 14" andererseits verbunden sind, so dass eine Rückstellkraft in Richtung der Öffnungsstellung der jeweiligen Luftklappe 2, 2', 2" bewirkt wird. Anschliessend wird das Betätigungselement 3 derart angebracht, dass das Langloch 31 von den drei an den Luftklappen 2, 2', 2" angebrachten Befestigungsstiften 21, 21', 21" durchragt wird. Die Befestigungsstifte 21, 21', 21" durchragen dann also jeweils die Seitenwand 11 des Rahmens 1, eine der Rückstellfedern 7, 7', 7" sowie das Langloch 31 des Betätigungselements 3. Indem die Verstellhebel 4, 4', 4" auf die an den Befestigungsstiften 21, 21', 21" angebrachten Vierkant-Kupplungselemente 22, 22', 22" aufgepresst werden, ist das Betätigungselement 3 zwischen den Verstellhebeln 4, 4', 4" und der Seitenwand 11 des Rahmens 1 gehalten, jedoch in Richtung der Längserstreckung des Langlochs 31, d.h. entlang der Verschieberichtung a, über einen gewissen Bereich frei verschiebbar. Die Verstellhebel 4, 4', 4" ragen dabei mit ihren vorstehenden Betätigungsbereichen 41, 41', 41" derart senkrecht von den Drehachsen der Luftklappen 2, 2', 2" weg, dass die Betätigungsbereiche 41, 41', 41" in der Öffnungsstellung der Luftklappen 2, 2', 2" jeweils auf derselben Seite des Betätigungselements 3 wie die Mitnehmer 32, 32', 32" zu liegen kommen.

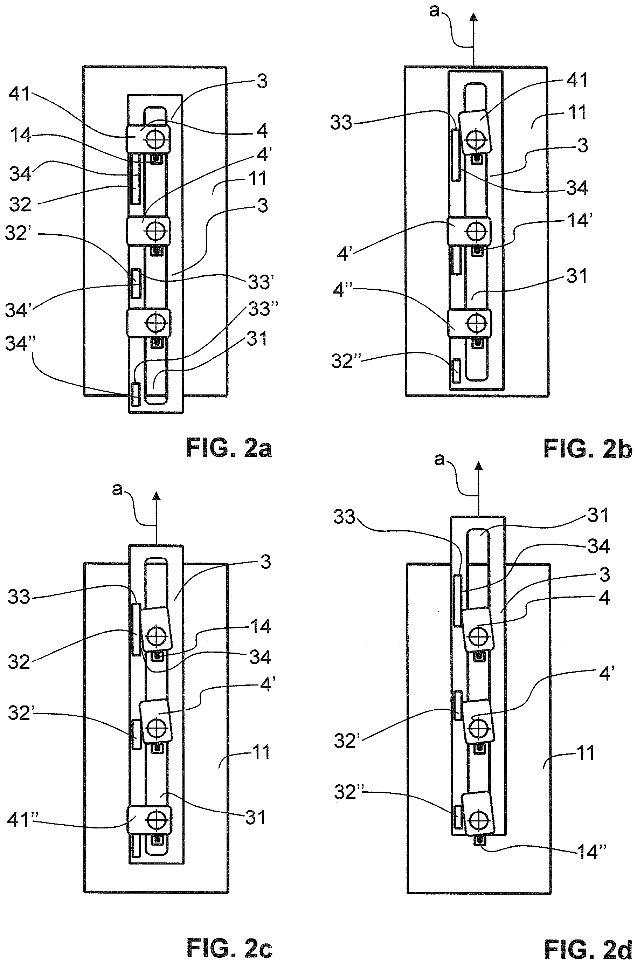

Die Funktionsweise der Luftklappenanordnung ist insbesondere in den Figuren 1a bis 1d bzw. 2a bis 2d gut ersichtlich, in denen unterschiedliche Stellungen des Betätigungselements 3 relativ zum Rahmen 1 und entsprechend unterschiedliche Stellungen der Luftklappen 2, 2', 2" dargestellt sind.

In der in den Figuren 1a und 2a gezeigten Ausgangsstellung sind alle drei Luftklappen 2, 2', 2" aufgrund der Federwirkung der Rückstellfedern 7, 7', 7" in ihrer jeweiligen Öffnungsstellung, so dass eine maximal grosse Luftmenge durch die Luftdurchtrittsöffnung 15 hindurch strömen kann. Das Betätigungselement 3 übt in dieser Ausgangsstellung auf die Verstellhebel 4, 4', 4" keine Kraft und insbesondere kein Drehmoment aus.

In der in den Figuren 1b und 2b gezeigten Situation ist das Betätigungselement 3 im Vergleich zur Figur 1a/2a etwas in Richtung der Verschieberichtung a vorgeschoben. Beim Verschieben hat der entlang der Verschieberichtung a zuvorderst angeordnete Mitnehmer 32 mit seiner ersten Anschlagfläche 33 am Betätigungsbereich 41 des Verstellhebels 4 der in der Figur 1b zuoberst angeordneten Luftklappe 2 angeschlagen und dadurch ein Drehmoment auf die Luftklappe 2 ausgeübt, so dass diese um ca. 90° in ihre Schliessstellung gedreht wurde. Der Mitnehmer 32 liegt nun weiterhin, jedoch mit der zweiten Anschlagfläche 34, am Verstellhebel 4 an und verhindert dadurch entgegen der Federkraft der Rückstellfeder 7 ein Zurückdrehen der Luftklappe 2 in ihre Öffnungsstellung. Die anderen beiden Mitnehmer 32', 32" haben noch kein Drehmoment auf die unteren beiden Luftklappen 2', 2" ausgeübt, womit diese somit noch in ihrer Öffnungsstellung sind.

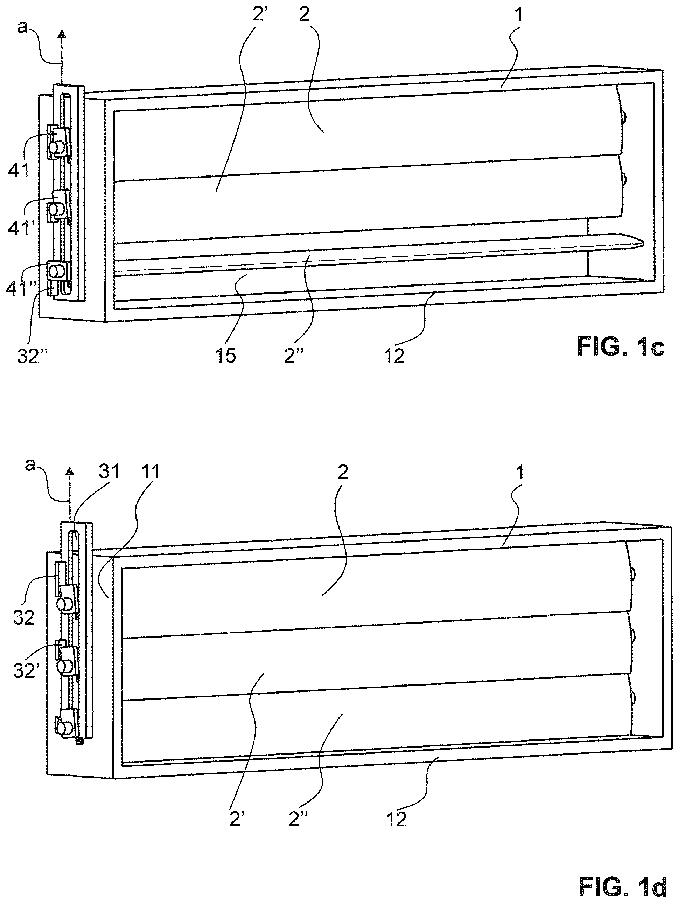

Bei den Figuren 1c und 2c wurde das Betätigungselement 3 im Vergleich zu den Figuren 1b und 2b noch weiter entlang der Verschieberichtung a vorgeschoben, wodurch auch der mittlere der Mitnehmer 32' an einem der Verstellhebel 4' angeschlagen und die entsprechende Luftklappe 2' in ihre Schliessstellung verstellt hat.

Bei der in den Figuren 1d und 2d gezeigten Situation befindet sich das Betätigungselement 3 in seiner entlang der Verschieberichtung a maximal vorgeschobenen Position. In dieser Position schlagen alle drei Mitnehmer 32, 32', 32" an jeweils einem Verstellhebel 4, 4', 4" an und üben auf diesen jeweils ein Drehmoment entgegen der Rückstellkraft der Rückstellfedern 7, 7', 7" aus, so dass alle drei Luftklappen 2, 2', 2" in ihren Schliessstellung gehalten sind.

Durch das asynchrone, d.h. nacheinander erfolgende Verstellen der drei Luftklappen 2, 2', 2" ist die maximal aufzuwendende Kraft zum Verschieben des Betätigungselements 3 geringer, als wenn alle drei Luftklappen 2, 2', 2" gleichzeitig verstellt würden. Dies stellt insbesondere im Hinblick auf Verschmutzungen und Vereisungen der Luftklappenanordnung einen wesentlichen Vorteil dar, da dadurch die Anforderungen an eine Antriebseinheit zum Verschieben des Betätigungselements 3 vermindert werden können.

Mittels Verwendung von unterschiedlichen Betätigungselementen 3, welche sich lediglich in der Anordnung der Mitnehmer 32, 32', 32" unterscheiden, kann die Luftklappenanordnung auf sehr einfache Art und Weise an unterschiedliche Bedürfnisse in Bezug auf das Verstellverhalten der Luftklappen 2, 2', 2" angepasst werden. Wenn die Mitnehmer 32, 32', 32" zum Beispiel anstatt in unregelmässigen in regelmässigen Abständen entlang der Verschieberichtung a angeordnet werden, kann ein synchrones anstatt asynchrones Verstellen der Luftklappen 2, 2', 2" erreicht werden. Mittels Wahl eines entsprechenden Betätigungselements 3 kann das Verstellen der Luftklappen 2, 2', 2" somit nach Bedarf eingestellt und die Luftklappenanordnung entsprechend ausgelegt werden. Auch ein Umrüsten einer bestehenden Luftklappenanordnung mit einem neuen Betätigungselement 3 ist möglich, indem einfach die Verstellhebel 4, 4', 4" abgenommen und nach dem Ersetzten des Betätigungselements 3 wieder angebracht werden.

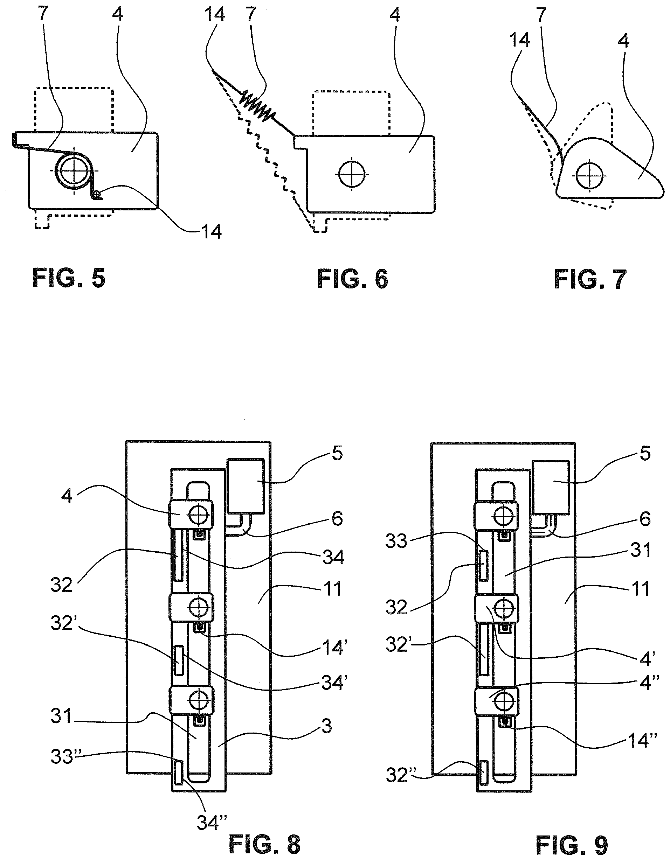

In den Figuren 5 bis 7 sind verschiedene Varianten von Rückstellfederanordnungen gezeigt, um die Luftklappen 2, 2', 2" im Bereich der Befestigungsstifte 21, 21', 21" oder der Verstellhebel 4, 4', 4" mit einer in Richtung der Öffnungsstellung wirkenden Federkraft zu beaufschlagen. Bei der in der Figur 5 gezeigten Variante ist eine Drehfeder 7 mit einem ersten Ende an einem am Verstellhebel 4 vorgesehenen Vorsprung und mit einem zweiten Ende an einer am Rahmen 1 befestigten Federhalterung 14 verbunden. Bei der Variante der Figur 6 wird anstelle einer Torsionsfeder eine Schraubenfeder 7 verwendet. Die Figur 7 zeigt, dass auch die Verwendung einer Blattfeder 7 möglich ist, und dass der Verstellhebel 4 nicht zwingend rechteckig ausgestaltet sein muss.

In der Figur 8 ist eine Ausführungsform gezeigt, bei welcher eine Antriebseinheit 5 zum Vorschieben des Betätigungselements 3 direkt an der Seitenwand 11 des Rahmens 1 angebracht ist. Bei der Antriebseinheit 5 kann es sich um einen einfachen Elektromotor handeln, der hier via einen Antriebsübertragungsstrang 6 mit dem Betätigungselement 3 verbunden ist.

Die in der Figur 9 gezeigte Ausführungsform unterscheidet sich durch die Anordnung der Mitnehmer 32, 32', 32" auf dem Betätigungselement 3 von denjenigen der Figuren 1a bis 8. Die Mitnehmer 32, 32', 32" sind hier so angeordnet und ausgebildet, dass zuerst die mittlere Luftklappe 2', dann die oberste und schliesslich die unterste Luftklappe 2" verstellt wird.

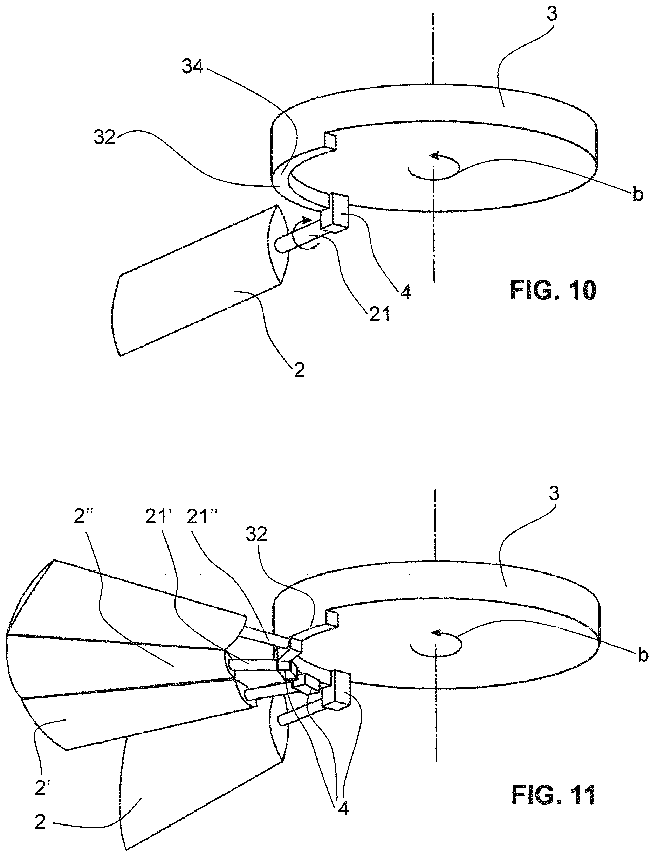

Bei der in den Figuren 10 und 11 gezeigten Ausführungsform sind die Luftklappen 2, 2', 2" sternförmig angeordnet und im Zentrum ist ein Betätigungselement 3 in Form eines Drehrad vorgesehen. Um die Luftklappen 2, 2', 2" zu verstellen, wird das Drehrad in eine Drehrichtung b gedreht. Ein einziger, am Drehrad angeordneter Mitnehmer 32 schlägt beim Drehen des Drehrades nacheinander an den verschiedenen Luftklappen 2, 2', 2" an und dreht diese somit nacheinander von ihrer Öffnungsstellung in die Schliessstellung. Aufgrund der sich über einen grossen Winkelbereich erstreckenden zweiten Anschlagfläche 34 des Mitnehmers 32 wird die Luftklappe 2 nach dem Verstellen weiterhin in ihrer Schliessstellung gehalten, auch wenn das Drehrad zum Verstellen von weiteren Luftklappen 2', 2" weiter gedreht wird.

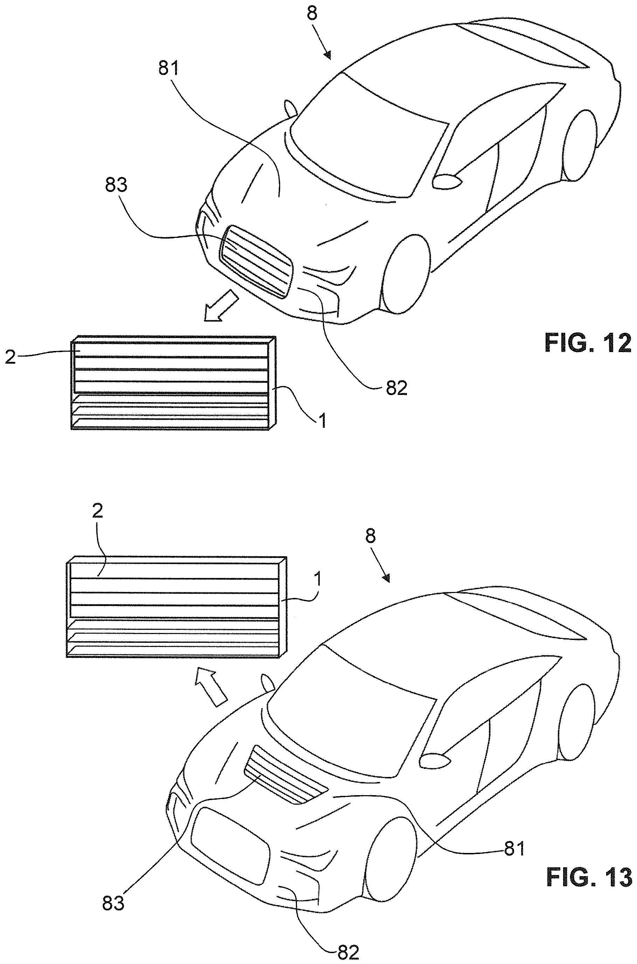

In den Figuren 12 bis 19 sind verschiedene Möglichkeiten zur Verwendung und Anordnung der erfindungsgemässen Luftklappenanordnung bei einem Kraftfahrzeug 8 in Form eines Automobils gezeigt. Selbstverständlich sind unzählige weitere Möglichkeiten möglich, auch bei anderen Fahrzeugtypen.

Bei dem in der Figur 12 gezeigten Kraftfahrzeug 8 ist die Luftklappenanordnung im Bereich der Frontpartie 82 angeordnet, also in dem bei bestimmungsgemässer Geradeausfahrt des Kraftfahrzeugs 8 frontal nach vorne hin gerichteten, unterhalb der Motorhaube 81 angeordneten Bereich. Die Luftklappenanordnung bildet dabei eine Kühllufteinlassöffnung 83. Bei einer derartigen Anordnung sind die auf die Luftklappen 2 wirkenden Kräfte des Fahrtwindes besonders stark, wodurch die vorliegende Erfindung aufgrund des verhältnismässig kleinen Kraftaufwandes zum Verstellen der Luftklappen 2 besondere Vorteile bietet.

Bei dem in der Figur 13 dargestellten Kraftfahrzeug 8 bildet die Luftklappenanordnung ebenfalls eine Kühllufteinlassöffnung 83, welche jedoch innerhalb der Motorhaube 81 angeordnet ist.

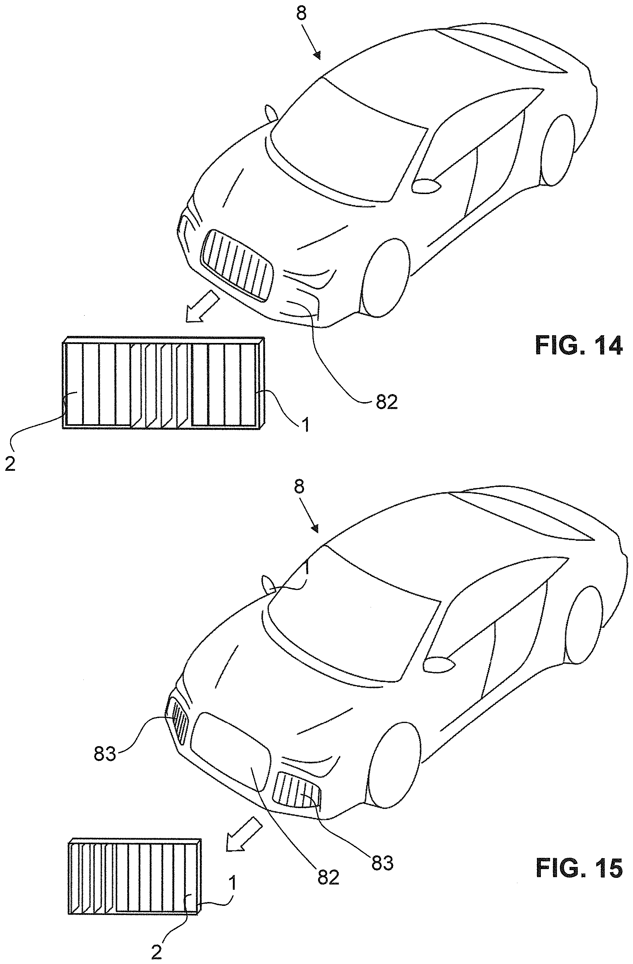

Die Variante der Figur 14 unterscheidet sich dadurch von derjenigen der Figur 12, dass die Luftklappen 2 hier jeweils vertikal anstatt horizontal im Rahmen 1 angeordnet sind. Die Verschieberichtung a des Betätigungselements 3 zum Verstellen der Luftklappen 2 entspricht hier der horizontalen Richtung.

Bei dem in der Figur 15 gezeigten Ausführungsbeispiel sind zwei Luftklappenanordnungen mit Luftklappen 2, die sich jeweils in die vertikale Richtung erstrecken, seitlich in der Frontpartie 82 angeordnet. Beide Luftklappenanordnungen bilden wiederum Kühllufteinlassöffnungen 83.

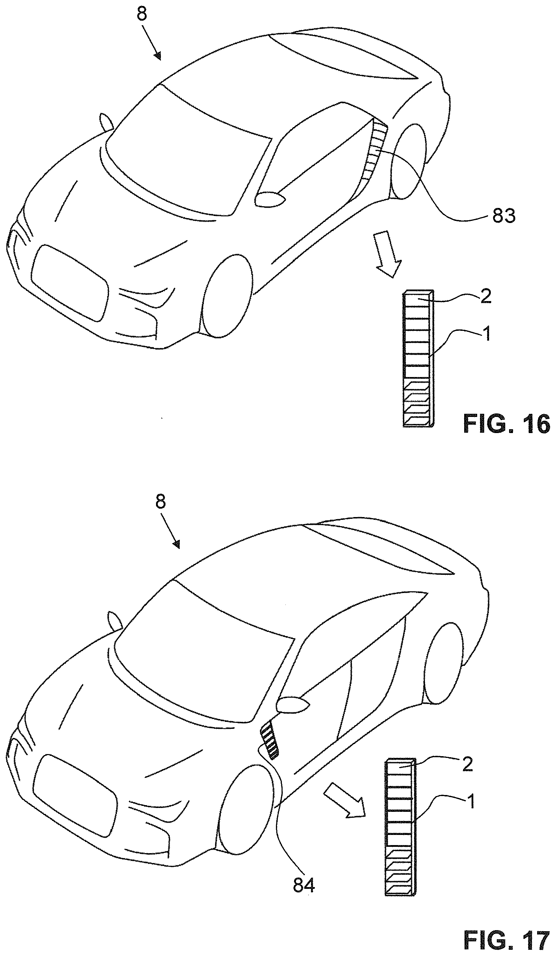

In der Figur 16 ist ein Kraftfahrzeug 8 gezeigt, bei dem beidseitig jeweils eine Luftklappenanordnung in einem hinteren Bereich des Fahrzeugs vorgesehen ist. Die Luftklappenanordnungen dienen zum Verschliessen bzw. Freigeben von Kühllufteinlassöffnungen 83, welche zum Beispiel zur Bremskühlung der Hinterräder vorgesehen sind.

Beim Fahrzeug 8, welches in der Figur 17 dargestellt ist, dienen die beidseitig angeordneten Luftklappenanordnungen zum Regeln der Durchflussmenge eines jeweils durch eine Abluftauslassöffnung 84 hindurchströmenden Luftstroms.

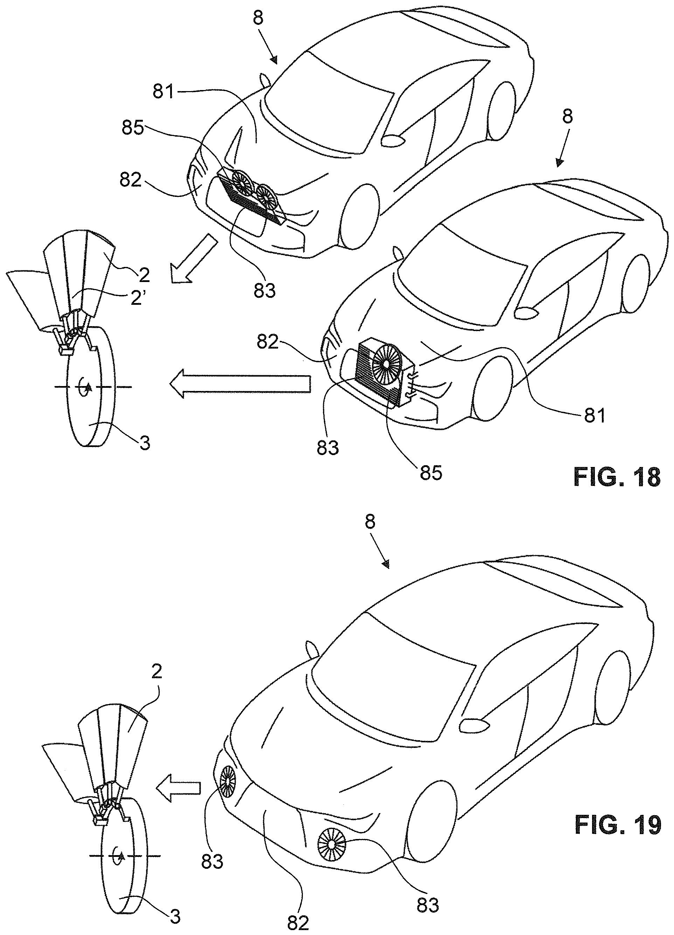

In der Figur 18 sind sternförmige Luftklappenanordnungen gezeigt, welche jeweils in der Frontpartie 82 des Fahrzeugs 8 in einem Bereich hinter einem Wärmetauscher 85 angeordnet sind. Der Wärmetauscher 85 dient zum Kühlen der Aggregate des Fahrzeuges 8 sowie von dessen Fahrgastraum. Pro Wärmetauscher 85 können eine, zwei oder noch mehr sternförmige Luftklappenanordnungen mit jeweils einem Betätigungselement 3 in Form eines Drehrades zum Verstellen der Luftklappen 2 vorgesehen sein.

Bei dem in der Figur 19 gezeigten Fahrzeug 8 sind in der Frontpartie 82 zwei Luftklappenanordnungen mit jeweils sternförmig angeordneten Luftklappen 2 zum Verschliessen und Freigeben von entsprechend zugehörigen Kühllufteinlassöffnungen vorgesehen. Die Luftklappenanordnungen und insbesondere deren Luftklappen 2 sind hier jeweils von aussen gut sichtbar am Fahrzeug 8 angeordnet. Das erfindungsgemässe asynchrone Verstellen der Luftklappen 2 bewirkt hier für den Beobachter einen ästhetisch speziellen Effekt.

Die Erfindung ist selbstverständlich nicht auf die vorliegenden Ausführungsformen und Varianten beschränkt, sondern eine Vielzahl von Abwandlungen ist möglich. So könnten die Rückstellfedern 7, 7', 7" zum Beispiel komplett entfallen. Die Luftklappen 2, 2', 2" könnten dann zum Beispiel jeweils in den Öffnungs- und Schliessstellungen einrasten oder nur aufgrund der Reibung am Rahmen 1 in den entsprechenden Stellungen gehalten sein. Das Zurückdrehen der Luftklappen 2, 2', 2" könnte dann anstatt mit Rückstellfedern zum Beispiel mit einem zweiten Betätigungselement erreicht werden. Das zweite Betätigungselement kann bzgl. Ausgestaltung und Funktion gleich oder ähnlich wie das erste Betätigungselement ausgebildet sein, oder es kann eine beliebig andersartige Ausbildung aufweisen. Die Funktion der Rückstellfedern könnte alternativ auch jeweils ein Gewicht bzw. eine entsprechende Gewichtsverteilung der Luftklappen 2, 2', 2" übernehmen. Die Rückstellkraft würde dann auf der Schwerkraft oder dem Fahrtwind basieren. Die Luftklappenanordnung kann beispielsweise auch in der den Motorraum vom Fahrgastraum trennenden Stirnwand oder im Armaturenbrett des Kraftfahrzeuges angeordnet sein, um die Zuführung von Luft in den Fahrgastraum zu steuern. Eine Vielzahl weiterer Abwandlungen ist möglich.

**BEZUGSZEICHENLISTE**

| | | | |
|---|---|---|---|
| 1 | Rahmen | 11 | Seitenwand |
| 12 | Längswand | 41, 41', 41" | Betätigungsbereich |
| 13, 13', 13" | Montageloch | | |
| 14, 14', 14" | Federhalterung | 5 | Antriebseinheit |
| 15 | Luftdurchtrittsöffnung | 6 | Antriebsübertragungsstrang |
| | | | |
| 2, 2', 2" | Luftklappe | 7, 7', 7" | Rückstellfeder |
| 21, 21', 21" | Befestigungsstift | | |
| 22, 22', 22" | Vierkant-Kupplungselement | 8 | Kraftfahrzeug |
| | | 81 | Motorhaube |
| | | 82 | Frontpartie |
| 3 | Betätigungselement | 83 | Kühllufteinlassöffnung |
| 31 | Langloch | 84 | Abluftauslassöffnung |
| 32, 32', 32" | Mitnehmer | 85 | Wärmetauscher |
| 33, 33', 33" | Erste Anschlagfläche | | |
| 34, 34', 34" | Zweite Anschlagfläche | a | Verschieberichtung |
| | | b | Drehrichtung |
| 4, 4', 4" | Verstellhebel | | |

## Patentansprüche

1. Luftklappenanordnung für ein Fahrzeug, insbesondere ein Kraftfahrzeug (8), aufweisend
zumindest eine erste Luftklappe (2) und eine zweite Luftklappe (2'), welche jeweils von einer ersten Stellung in eine zweite Stellung verstellbar sind, um eine in der zweiten Stellung im Vergleich zur ersten Stellung veränderte Luftmenge durch eine Luftöffnung (83, 84) des Fahrzeugs hindurchströmen zu lassen; sowie
ein Betätigungselement (3) zum Verstellen sowohl der ersten als auch der zweiten Luftklappe (2, 2'),
wobei an der ersten Luftklappe (2) ein erster Verstellhebel (4) und an der zweiten Luftklappe (2') ein zweiter Verstellhebel (4') angebracht ist,
und wobei das Betätigungselement (3) einen oder mehrere Mitnehmer (32, 32', 32") aufweist, welche bei einer Betätigung des Betätigungselements (3) zuerst am ersten Verstellhebel (4) anschlagen, um dadurch die erste Luftklappe (2) von ihrer ersten in ihre zweite Stellung zu verstellen, und danach am zweiten Verstellhebel (4') anschlagen, um dadurch die zweite Luftklappe (2') von ihrer ersten in ihre zweite Stellung zu verstellen,
**dadurch gekennzeichnet, dass**
das Betätigungselement (3) dazu ausgebildet ist, bei einer Betätigung zuerst die erste Luftklappe (2) von ihrer ersten in ihre zweite Stellung zu verstellen und erst dann die zweite Luftklappe (2') von ihrer ersten in ihre zweite Stellung zu verstellen, und dass der eine oder die mehreren Mitnehmer (32, 32', 32") durch jeweils einen am Betätigungselement (3) vorgesehenen Vorsprung gebildet werden.

2. Luftklappenanordnung nach Anspruch 1, wobei der oder die Mitnehmer (32, 32', 32") dazu ausgebildet sind, die Luftklappen (2' 2', 2") nach dem Verstellen in ihrer jeweils zweiten Stellung zu halten.

3. Luftklappenanordnung nach Anspruch 2, wobei der oder die Mitnehmer (32, 32', 32") jeweils eine erste Anschlagfläche (33, 33', 33") aufweisen, um zumindest eine der Luftklappen (2, 2', 2") von ihrer ersten in ihre zweite Stellung zu verstellen, sowie eine zweite Anschlagfläche (34, 34', 34") aufweisen, um jeweils dieselbe Luftklappe (2, 2', 2") nach dem Verstellen in ihrer zweiten Stellung zu halten.

4. Luftklappenanordnung nach einem der vorhergehenden Ansprüche, wobei das Betätigungselement (3) einen ersten Mitnehmer (32) und einen zweiten Mitnehmer (32') aufweist, und wobei der erste Mitnehmer (32) zum Anschlagen an den ersten Verstellhebel (4) dient, um dadurch die erste Luftklappe (2) zu verstellen, und der zweite Mitnehmer (32') zum Anschlagen an den zweiten Verstellhebel (4') dient, um dadurch die zweite Luftklappe (2') zu verstellen.

5. Luftklappenanordnung nach einem der vorhergehenden Ansprüche, wobei das Betätigungselement (3) mehrere Mitnehmer (32, 32', 32") aufweist, welche im Wesentlichen auf einer geraden Linie angeordnet sind.

6. Luftklappenanordnung nach einem der vorhergehenden Ansprüche, wobei das Betätigungselement (3) mehrere Mitnehmer (32, 32', 32") aufweist, welche im Wesentlichen auf einer Kreislinie angeordnet sind.

7. Luftklappenanordnung nach einem der vorhergehenden Ansprüche, wobei das Betätigungselement (3) zum Verstellen der Luftklappen (2, 2', 2") relativ zu diesen im Wesentlichen geradlinig entlang einer Verschieberichtung (a) verschiebbar ist.

8. Luftklappenanordnung nach einem der Ansprüche 1 bis 4 oder 6, wobei das Betätigungselement (3) als Drehrad ausgebildet ist.

9. Luftklappenanordnung nach einem der vorhergehenden Ansprüche, wobei zumindest drei Luftklappen (2, 2', 2") vorgesehen sind, welche sternförmig angeordnet sind.

10. Luftklappenanordnung nach einem der vorhergehenden Ansprüche, wobei die Luftklappen (2, 2', 2") jeweils mit einer in Richtung der ersten Stellung wirkenden Federkraft beaufschlagt sind.

11. Luftklappenanordnung nach einem der vorhergehenden Ansprüche, wobei die ersten Stellungen der Luftklappen (2, 2', 2") jeweils Öffnungsstellungen darstellen und die zweiten Stellungen der Luftklappen (2, 2', 2") jeweils Schliessstellungen darstellen.

12. Luftklappenanordnung nach einem der vorhergehenden Ansprüche, wobei die erste und die zweite Luftklappe (2, 2') gemeinsam in einem Rahmen (1) gehalten sind, und wobei dieser Rahmen (1) eine Luftdurchtrittsöffnung (15) aufweist, welche mittels den Luftklappen (2, 2') verschlossen bzw. freigegeben werden kann.

13. Luftklappenanordnung nach einem der vorhergehenden Ansprüche, wobei das Betätigungselement (3) ein Langloch (31) aufweist, welches von einem an der ersten Luftklappe (2) angebrachten ersten Element (21) sowie von einem an der zweiten Luftklappe (2') angebrachten zweiten Element (21') durchragt wird.

14. Fahrzeug, insbesondere Kraftfahrzeug (8), mit einer Luftklappenanordnung nach einem der vorhergehenden Ansprüche.

## Claims

1. A ventilation flap assembly for a vehicle, in particular a motor vehicle (8), comprising
at least a first ventilation flap (2) and a second ventilation flap (2') which in each case can be adjusted from a first position into a second position, in order to allow the passage of a quantity of air, which differs in the second position in comparison with the quantity of air in the first position, through an air opening (83, 84) of the vehicle; and
an actuating element (3) for adjusting both the first and the second ventilation flap (2, 2'),
wherein a first adjusting lever (4) is attached to the first ventilation flap (2) and a second adjusting lever (4') is attached to the second ventilation flap (2'),
and wherein the actuating element (3) comprises one or more drive elements (32, 32', 32") which, when the actuating element (3) is actuated, firstly come into contact with the first adjusting lever (4) in order to adjust the first ventilation flap (2) thereby from its first position into its second position and subsequently come into contact with the second adjusting lever (4') in order to adjust the second ventilation flap (2') thereby from its first position into its second position,
**characterized in that**
the actuating element (3) is configured, when actuated, firstly to adjust the first ventilation flap (2) from its first position into its second position, and only then to adjust the second ventilation flap (2') from its first position into its second position and that the one or more drive elements (32, 32', 32") are in each case formed by a projection provided on the actuating element (3).

2. The ventilation flap assembly as claimed in claim 1, wherein the drive element (s) (32, 32', 32") are configured to hold the ventilation flaps (2, 2', 2"), after the adjustment, in their respective second position.

3. The ventilation flap assembly as claimed in claim 2, wherein the drive element (s) (32, 32', 32") have in each case a first stop surface (33, 33', 33") in order to adjust at least one of the ventilation flaps (2, 2', 2") from its first position into its second position, as well as a second stop surface (34, 34', 34") in order respectively to hold said ventilation flap (2, 2', 2"), after the adjustment, in its second position.

4. The ventilation flap assembly as claimed in one of the preceding claims, wherein the actuating element (3) comprises a first drive element (32) and a second drive element (32') and wherein the first drive element (32) serves for coming into contact with the first adjusting lever (4), in order to adjust the first ventilation flap (2) thereby, and the second drive element (32') serves for coming into contact with the second adjusting lever (4'), in order to adjust the second ventilation flap (2') thereby.

5. The ventilation flap assembly as claimed in one of the preceding claims, wherein the actuating element (3) has a plurality of drive elements (32, 32', 32") which are substantially arranged on a straight line.

6. The ventilation flap assembly as claimed in one of the preceding claims, wherein the actuating element (3) has a plurality of drive elements (32, 32', 32") which are substantially arranged on a circle.

7. The ventilation flap assembly as claimed in one of the preceding claims, wherein for adjusting the ventilation flaps (2, 2', 2") the actuating element (3) is displaceable relative thereto substantially in a straight line in a direction of displacement (a) .

8. The ventilation flap assembly as claimed in one of claims 1 to 4 or 6, wherein the actuating element (3) is configured as a rotating wheel.

9. The ventilation flap assembly as claimed in one of the preceding claims, wherein at least three ventilation flaps (2, 2', 2") which are arranged in a star-shaped manner are provided.

10. The ventilation flap assembly as claimed in one of the preceding claims, wherein the ventilation flaps (2, 2', 2") in each case are acted upon by a spring force acting in the direction of the first position.

11. The ventilation flap assembly as claimed in one of the preceding claims, wherein the first positions of the ventilation flaps (2, 2', 2") in each case constitute open positions and the second positions of the ventilation flaps (2, 2', 2") in each case constitute closed positions.

12. The ventilation flap assembly as claimed in one of the preceding claims, wherein the first and the second ventilation flaps (2, 2') are held together in a frame (1), and wherein this frame (1) has an air through-opening (15) which is able to be closed and/or opened by means of the ventilation flaps (2, 2').

13. The ventilation flap assembly as claimed in one of the preceding claims, wherein the actuating element (3) comprises a slot (31) which is penetrated by a first element (21) attached to the first ventilation flap (2) and by a second element (21') attached to the second ventilation flap (2').

14. A vehicle, in particular a motor vehicle (8), having a ventilation flap assembly as claimed in one of the preceding claims.

## Revendications

1. Agencement de volets d'aération pour un véhicule, en particulier un véhicule automobile (8), comprenant
au moins un premier volet d'air (2) et un deuxième volet d'air (2'), dont chacun est réglable d'une première position à une deuxième position afin de permettre de circuler, quand celui-ci est dans la deuxième position, une quantité d'air qui a changé par rapport à la première position à travers une ouverture (83, 84) à air du véhicule; et
un élément d'actionnement (3) pour régler à la fois le premier et le deuxième clapet d'air (2, 2'),
dans lequel un premier levier de réglage (4) est fixé au premier volet d'air (2) et un second levier de réglage (4') est fixé au second volet d'air (2'),
et dans lequel l'élément d'actionnement (3) comprend un ou plusieurs entraineurs (32, 32', 32', 32") qui, lorsque l'élément d'actionnement (3) est actionné, frappent d'abord le premier levier de réglage (4) pour déplacer ainsi le premier volet d'air (2) de sa première à sa deuxième position et frappent ensuite le deuxième levier de réglage (4') pour déplacer ainsi le deuxième volet d'air (2') de sa première à sa deuxième position,
**caractérisé en ce que**
l'élément d'actionnement (3) est conçu, lorsqu'il est actionné, d'abord pour déplacer le premier volet d'air (2) de sa première à sa deuxième position et seulement ensuite pour déplacer le deuxième volet d'air (2') de sa première à sa deuxième position, et **en ce que** le ou les entraineurs (32, 32', 32") sont chacun formés par une saillie prévue sur l'élément d'actionnement (3).

2. Agencement de volets d'air selon la revendication 1, dans lequel le ou les entraineurs (32, 32', 32"') sont conçus pour maintenir les volets d'air (2', 2") dans leur deuxième position respective après réglage.

3. Agencement de volets d'air selon la revendication 2, dans lequel le ou les entraineurs (32, 32', 32"') présentent chacun une première face de butée (33, 33', 33") pour déplacer au moins un des volets d'air (2, 2', 2") de sa première à sa deuxième position, et présentent une deuxième face de butée (34, 34', 34") pour maintenir le même volet (2, 2', 2"') en sa deuxième position après déplacement.

4. Agencement de volets d'air selon l'une quelconque des revendications précédentes, dans lequel l'élément d'actionnement (3) comprend un premier entraîneur (32) et un deuxième entraîneur (32'), et dans lequel le premier entraîneur (32) sert à frapper le premier levier de réglage (4) de manière à déplacer le premier volet d'air (2) et dans lequel le deuxième entraîneur (32') sert à frapper le deuxième levier de réglage (4') afin de déplacer le deuxième volet d'air (2').

5. Agencement de volets d'air selon l'une quelconque des revendications précédentes, dans lequel l'élément d'actionnement (3) comprend une pluralité d'entraineurs (32, 32', 32"') disposés sensiblement sur une ligne droite.

6. Agencement de volets d'air selon l'une quelconque des revendications précédentes, dans lequel l'élément d'actionnement (3) comprend une pluralité d'entraineurs (32, 32', 32"') disposés sensiblement sur une ligne circulaire.

7. Agencement de volets d'air selon l'une quelconque des revendications précédentes, dans lequel l'élément d'actionnement (3) pour régler les volets d'air (2, 2', 2"') par rapport à ceux-ci peut être déplacé sensiblement linéairement dans une direction de déplacement (a).

8. Agencement de volets d'air selon l'une quelconque des revendications 1 à 4 ou 6, l'élément d'actionnement (3) étant conçu comme une roue rotative.

9. Agencement de volets d'air selon l'une quelconque des revendications précédentes, avec au moins trois volets d'air (2, 2', 2', 2") disposés en forme d'étoile.

10. Agencement de volets d'air selon l'une quelconque des prescriptions précédentes, les volets d'air (2, 2', 2', 2"') étant actionnés chacun par un ressort agissant dans la direction de la première position.

11. Agencement de volets d'air selon l'une quelconque des revendications précédentes, dans lequel les premières positions des volets d'air (2, 2', 2"') représentent chacune des positions ouvertes et dans lequel les deuxièmes positions des volets d'air (2, 2', 2") représentent chacune des positions fermées.

12. Agencement de volets d'air selon l'une quelconque des revendications précédentes, dans lequel les premier et deuxième volets d'air (2, 2') sont maintenus ensemble dans un cadre (1), et dans lequel ce cadre (1) présente une ouverture de passage d'air (15) qui peut être fermée ou libérée au moyen des volets d'air (2, 2').

13. Agencement de volets d'air selon l'une quelconque des revendications précédentes, dans lequel l'élément d'actionnement (3) présente un trou allongé (31) lequel est traversé par un premier élément (21) fixé au premier volet d'air (2) et par un deuxième élément (21') fixé au second volet d'air (2').

14. Véhicule, en particulier véhicule automobile (8), muni d'un agencement de volets d'air selon l'une quelconque des revendications précédentes.
